(19) Europäisches Patentamt
European Patent Office
Office européen des brevets

(11) **EP 3 486 737 A1**

(12) **EUROPÄISCHE PATENTANMELDUNG**

(43) Veröffentlichungstag:
**22.05.2019 Patentblatt 2019/21**

(21) Anmeldenummer: **17202822.7**

(22) Anmeldetag: **21.11.2017**

(51) Int Cl.:
*G05B 19/4065* (2006.01)    *B23Q 17/09* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder:
• **pro-micron GmbH**
  **87600 Kaufbeuren (DE)**

• **Hochschule Bremen**
  **28199 Bremen (DE)**

(72) Erfinder:
• **Wunderlich, Rainer**
  **87600 Kaufbeuren (DE)**
• **Gläbe, Ralf**
  **28359 Bremen (DE)**

(74) Vertreter: **Raffay & Fleck**
**Patentanwälte**
**Grosse Bleichen 8**
**20354 Hamburg (DE)**

(54) **PROZESSPARAMETERINVARIANTE VERSCHLEISSERKENNUNG AN WERKZEUGEN FÜR DIE SPANABHEBENDE BEARBEITUNG VON WERKSTÜCKEN**

(57) Um ein Verfahren zur Bestimmung eines Verschleißkennwertes für den Verschleiß eines um eine Rotationsachse drehend angetriebenen, wenigstens eine Schneide aufweisenden Werkzeugs zum spanenden Bearbeiten eines Werkstücks mit nicht konstanter Spandicke entlang eines von dem Werkstück abgehobenen Spans, wobei das Verfahren während eines Bearbeitungsvorganges durchgeführt wird, wobei in wiederholten ersten Messungen jeweils eine auf dem Werkzeug in einer senkrecht zu der Rotationsachse und relativ zu dem rotierenden Werkzeug ortsfest liegenden ersten Richtung wirkende erste Kraft- und/oder Biegemomentkomponente erfasst wird, wobei in zeitgleich zu den ersten Messungen durchgeführten, wiederholten zweiten Messungen jeweils eine auf dem Werkzeug in einer senkrecht zu der Rotationsachse und senkrecht zu der ersten Richtung liegenden, relativ zu dem rotierenden Werkzeug ortsfesten zweiten Richtung wirkende zweite Kraft- und/oder Biegemomentkomponente erfasst wird und wobei Wertepaare aus zeitgleich erfassten ersten und zweiten Kraft- und/oder Biegemomentkomponenten in einem zweidimensionalen Koordinatensystem als Wertepaare einer Relation der zweiten Kraft- und/oder Biegemomentkomponente in Abhängigkeit von der ersten Kraft- und/oder Biegekomponente abgebildet werden und wobei die Verteilung der Wertepaare in dem Koordinatensystem ausgewertet wird, dahingehend weiterzubilden, dass der Verschleiß prozessparameterunabhängig erkannt werden kann, wird vorgeschlagen, dass
a. in der Verteilung solche Wertepaare als zu der wenigstens einen Schneide gehörig ermittelt und einer Wertepaarmenge zugerechnet werden, die entlang einer sich kontinuierlich vom Ursprung des Koordinatensystems weg erstreckenden Linie liegen,
b. für die Wertepaare der Wertepaarmenge anhand der Lage und/oder Orientierung der Wertepaare in dem Koordinatensystem auf ein Verhältnis einer bei einem Schnittvorgang auf dem Werkzeug lastenden Schnittkraft zu einer bei dem Schnittvorgang auf dem Werkzeug lastenden Schnittnormalkraft geschlossen und daraus ein den Verschleißgrad des Werkzeuges repräsentierender Verschleißkennwert abgeleitet wird.

Fig. 7

**Beschreibung**

Die Erfindung betrifft ein Verfahren für die prozessparameterinvariante Bestimmung eines Verschleißkennwertes für den Verschleiß eines um eine Rotationsachse drehend angetriebenen, wenigstens eine Schneide aufweisenden Werkzeugs zum spanenden Bearbeiten eines Werkstücks. Dieses Verfahren wird bei solchen Werkzeugen für die spanende Bearbeitung von Werkstücken eingesetzt, die während des Bearbeitungsvorgangs Späne mit nicht konstanter Spandicke abheben, wie dies zum Beispiel bei einer Fräsbearbeitung der Fall ist. Das Verfahren wird dabei in situ, also während eines Bearbeitungsvorganges, durchgeführt. Ausgegangen wird dabei von einem Verfahren, wie es in dem Oberbegriff des Patentanspruchs 1 bestimmt ist.

In der Fertigung werden für die Teil- oder Fertigbearbeitung von Werkstücken vielfach spanende Bearbeitungsverfahren, wie z.B. Fräsverfahren, eingesetzt. Solche Verfahren kommen insbesondere auch in der Massenfertigung zum Einsatz, dabei im Besonderen auch in der Massenfertigung von Werkstücken, bei denen es auf eine besonders präzise Bearbeitung ankommt. Unabhängig davon, ob eine besonders präzise Bearbeitung erforderlich ist oder ob es auf eine Bearbeitung in einem normalen Toleranzbereich ankommt, können die für die spanende Bearbeitung eingesetzten Werkzeuge nur bis zum Erreichen einer typischen Verschleißgrenze eingesetzt werden. Sind die eingesetzten Werkzeuge übermäßig und über die Verschleißgrenze hinaus verschlissen bzw. abgenutzt, so genügen die Bearbeitungsergebnisse in der Regel nicht mehr den Anforderungen. Um in den Fertigungsverfahren nicht etwa ein hohes Maß an Ausschuss zu produzieren, bis anhand einer Qualitätskontrolle der erhaltenen Werkstücke festgestellt wird, dass aufgrund eines verschlissenen Werkzeuges zum Beispiel Fertigungstoleranzen oder eine Maßhaltigkeit oder eine Kantenschärfe oder dergleichen nicht mehr eingehalten werden kann, wird angestrebt, den Werkzeugzustand in situ, d. h. während des Bearbeitungsverfahrens überprüfen und nachhalten zu können.

Ein Vorschlag, wie dies erfolgen kann, ist in der EP 2924526A1 gegeben. Gemäß der dortigen Offenbarung können mittels eines Messgeräts, dies kann zum Beispiel ein von der hiesigen Mitanmelderin pro-micron GmbH & Co. KG unter der Marke SPIKE® angebotener, mit entsprechender Messsensorik ausgestatteter Werkzeughalteradapter sein, auf dem Werkzeug lastende Biegemomente nach ihren in zwei linear unabhängigen, senkrecht zu der Rotationsachse stehenden und relativ zum rotierenden Werkzeug ortsfesten Richtungen orientierten Komponenten erfasst und als Wertepaare der so erfassten Komponenten in einem entsprechenden Koordinatensystem betrachtet werden. Bei diesem bekannten Vorschlag wird ein so erhaltenes Bild insbesondere im Hinblick auf erkannte Symmetrien und Störungen derselben hin betrachtet, wobei Störungen der Symmetrien als Abweichungen von einem Sollzustand erkannt und als Verschleiß zumindest einer Schneide eines mehrschneidigen Werkzeugs erfasst werden. Erörtert werden in dieser vorbekannten Anmeldung auch und insbesondere prozessabhängige Entwicklungen und Veränderungen in den betrachteten Darstellungen. Zwar gibt die Lehre nach der EP 2924526A1 mit der dort spezifisch angegebenen Darstellung und dem Auftrag von Wertepaaren von Biegemomentkomponenten in zwei linear unabhängigen Richtungen, die senkrecht zur Rotationsachse des Werkzeugs liegen, bereits eine gute Darstellung, anhand derer prozessabhängig ein Zustand des Werkzeugs und Probleme mit dem Werkzeug erkannt werden können, allerdings besteht weiterhin ein grundsätzlicher Bedarf, einen Verschleiß eines Werkzeugs auch prozessparameterinvariant erkennen und diesen anhand eines Verschleißkennwertes kennzeichnen zu können.

Diesen Bedarf zu erfüllen, ist Aufgabe der Erfindung.

Gelöst wird diese Aufgabe durch ein Verfahren zur prozessparameterinvarianten Bestimmung eines Verschleißkennwertes für den Verschleiß eines um eine Rotationsachse drehend angetriebenen, wenigstens eine Schneide aufweisenden Werkzeugs zum spanenden Bearbeiten eines Werkstücks mit den Merkmalen des Patentanspruchs 1. Vorteilhafte Weiterbildungen und mögliche Varianten des erfindungsgemäßen Verfahrens sind in den Patentansprüchen 2 bis 16 angegeben.

Das erfindungsgemäße Verfahren zur prozessparameterinvarianten Bestimmung eines Verschleißkennwertes für den Verschleiß eines um eine Rotationsachse drehend angetriebenen, wenigstens eine Schneide aufweisenden Werkzeugs zum spanenden Bearbeiten eines Werkstücks mit nicht konstanter Spandicke entlang eines von dem Werkstück abgehobenen Spans wird dabei erfindungsgemäß während eines Bearbeitungsvorganges durchgeführt, erfolgt also in situ. Dabei wird in wiederholten ersten Messungen jeweils eine auf dem Werkzeug in einer senkrecht zu der Rotationsachse und relativ zu dem rotierenden Werkzeug ortsfest liegenden ersten Richtung wirkende erste Kraft- und/oder Biegemomentkomponente erfasst. Weiterhin wird in zeitgleich zu den ersten Messungen und somit zu diesen korrelierten, wiederholten zweiten Messungen jeweils eine auf dem Werkzeug in einer senkrecht zur Rotationsachse und senkrecht zu der ersten Richtung sowie ortsfest zu dem rotierenden Werkzeug liegenden zweiten Richtung wirkende zweite Kraft- und/oder Biegemomentkomponente erfasst. Ferner werden Wertepaare aus den zeitgleich erfassten ersten und zweiten Kraft- und/oder Biegemomentkomponenten und den zugehörigen ersten Kraft- und/oder Biegemomentkomponente gebildet und diese als Relation in einem Koordinatensystem betrachtet, das entlang der Achsen die Werte der ersten Kraft- und/oder Biegemomentkomponenten (z.B. entlang einer X-Achse) und die Werte der zweiten Kraft- und/oder Biegemomentkomponenten (z.B. entlang einer Y-Achse) führt. Die Verteilung der Wertepaare in dem Koordinatensystem wird ausgewertet. Insoweit deckt sich das erfindungsgemäße Vorgehen noch mit dem aus der EP 2924526A1 grundsätzlich bekannten Vorgehen. Das Neue und Besondere an der Erfindung liegt nun zunächst darin, dass in der Verteilung der Wertepaare solche Wertepaare als zu der wenigstens einen Schneide gehörig ermittelt und einer Wertepaarmenge zugerechnet werden, die entlang einer sich kontinuierlich vom Ursprung des Koordinatensystems weg erstreckenden Linie liegen. Dabei heißt der Umstand, dass die Wertepaare entlang einer wie beschriebenen Linie liegen, nicht etwa, dass diese exakt auf der Linie liegen müssen. Sie können auch abseits der Linie liegen (werden dies in der Regel auch), wobei sie jedoch insgesamt eine geometrische Form in der Verteilung aufweisen, die deutlich entlang einer wie bezeichneten Linie lang gestreckt erstreckt ist. Dies kann zum Beispiel eine lang gestreckte Linsenform oder dergleichen sein.

Weiterhin ist für das erfindungsgemäße Verfahren neu und wesentlich, dass für die Wertepaare der Wertepaarmenge anhand der Lage und/oder Orientierung der Wertepaare ein dem Koordinatensystem auf ein Verhältnis einer bei einem Schnittvorgang auf dem Werkzeug lastenden Schnittkraft zu einer bei dem Schnittvorgang auf dem Werkzeug lastenden Schnittnormalkraft geschlossen und daraus ein den Verschleißgrad des Werkzeuges repräsentierender Verschleißkennwert abgeleitet wird. Die Schnittkraft ist dabei bestimmt als die an der Schneidkante des Werkzeuges in einer Richtung senkrecht zur Rotationsachse liegende Kraft. Sie verläuft tangential zu einem gedachten Kreis, auf dem die Schneidkante beim Rotieren des Werkzeuges umläuft. Die Schnittnormalkraft steht senkrecht auf der Schnittkraft und ist in Bezug zu dem erwähnten gedachten Kreis radial orientiert. Die anliegenden Kräfte werden bestimmt durch den eigentlichen Schneidprozess, das Ausräumen von Material am Werkstück und die durch den Werkzeugvorschub anliegenden Kräfte. Dabei sind die Kräfte in guter Näherung proportional zu den zugehörigen auf dem Werkzeug lastenden Biegemomenten. Um eine prozessparameterinvariante Aussage zu erhalten, ist eine Normierung vorzunehmen, die die durch den Werkzeugvorschub verursachten Kräfte herausrechnet.

Bei einer ideal scharfen Schneide eines Werkzeuges und bei einem typischen maschinenbaulichen spanbildenden Bearbeitungsprozess, wie z.B. Fräsprozess, verlaufen die Beträge der Schnittkraft und der Schnittnormalkraft im Verlauf der Spanbildung in grober Näherung proportional zueinander. Überlegungen der Erfinder haben nun gezeigt, dass wenn die Schneide hingegen stumpf wird oder auf andere Weise verschleißt, sich das Verhältnis in einer ausgeprägten Form in eine nicht proportionale Abhängigkeit zugunsten der Schnittnormalkraft verschiebt. Weitergehende Überlegungen haben dann gezeigt, dass die oben beschriebene Darstellung der Wertepaare sich hervorragend dafür eignet, dieses Verhältnis abzulesen, somit also auf einen Verschleißkennwert zu schließen und dies eben gerade unabhängig von einem Vergleich mit einem "Sollmuster" für einen bekannten Prozess mit bekannten Parametern.
Wie erwähnt, kann der Rückschluss auf einen Verschleißzustand des Werkzeuges insbesondere unabhängig von den gerade verwendeten Prozessparametern geschehen. Dies gilt jedenfalls dann besonders gut und klar, wenn entweder ein Werkzeug mit einer einzigen Schneide betrachtet wird oder bei einem Mehrschneidenwerkzeug komplexe Überlagerungen von Kräften bzw. Biegemomenten ausgenommen werden, die bei einem Eingriff von mehreren Schneiden gleichzeitig an dem Werkstück herrühren, wenn also solche Wertepaare gewählt werden, in denen Kraft- und/oder Biegemomentkomponenten erhalten sind, die zeitlich dann erfasst werden, wenn insbesondere nur eine Schneide eines Mehrschneidenwerkzeuges mit dem Material des Werkstücks in Eingriff steht. Alternativ oder zusätzlich können auch Überlagerungseffekte, die sich ergeben, wenn zwei oder sogar mehr Schneiden eines Mehrschneidenwerkzeuges gleichzeitig in Eingriff mit dem Werkstück stehen, durch z.B. geeignete Differenzbildung herausgerechnet werden.
Die Erfassung der Kraft- und/oder Biegemomentkomponenten kann z.B. mittels eines Messgeräts erfolgen, wie insbesondere mit einem von der hiesigen Mitanmelderin pro-micron GmbH & Co. KG unter der Marke SPIKE® angebotenen, mit entsprechender Messsensorik ausgestatteten Werkzeughalteradapter.
Für die Aufnahme der Wertepaare, die für die erfindungsgemäße Auswertung herangezogen werden, wird insbesondere eine minimale, aber auch eine maximale Anzahl von Wertepaaren bzw. ein minimales bzw. ein maximales zeitliches Messintervall gewählt werden. Eine minimale Anzahl von Wertepaaren, bzw. eine minimale Messdauer, ein minimales Messintervall, ist erforderlich, um eine statistisch hinreichend aussagekräftige Verteilung erhalten zu können. Ein maximales Messintervall und somit auch eine maximale Anzahl von Wertepaaren soll insbesondere verhindern, dass die Aufnahme der Wertepaarmenge zeitlich zu lange anhält und somit nicht mehr eine Momentaufnahme bildet, sondern die Aufnahme eines längeren Zeitintervalls mit sich darin ggf. deutlich verändernden Randbedingungen. Darüber hinaus ist es auch nicht erforderlich, eine über eine Höchstmenge der Wertepaare hinausgehende Anzahl von Wertepaaren zu erfassen, da dies keine zusätzlichen wesentlichen Informationen mehr beisteuert. In der Praxis wird man Messintervalle von weniger als 5s, typischerweise von unter 1s wählen. Bei einer Messrate von typischerweise 1 bis 10 kHz erhält man so Anzahlen von 1 .000 bis 10.000 Wertepaaren pro auszuwertender Aufnahme der Messwerte.
Ein Rückschluss auf das bezeichnete Verhältnis von Schnittkraft zu Schnittnormalkraft aus der Lage und/oder Orientierung (oder auch Verteilung) der Wertepaare der Wertepaarmenge kann dabei auf verschiedene Weisen erfolgen. Eine Möglichkeit besteht darin, eine Fläche zu betrachten, die von einer an die Lage der Wertepaare angepassten Linie umschlossen ist. Um hier einen prozessparameterunabhängigen Kennwert zu erhalten, wird diese Fläche durch Division durch ein signifikantes Längenmaß, z.B. den Abstand des vom Ursprung des Koordinatensystems am weitesten entfernt gelegenen Wertepaares zum Ursprung, normiert. Mit einem sich zu der Schnittkraft hin verschiebendem Verhältnis zwischen Schnittkraft und Schnittnormalkraft, also zunehmendem Verschleiß vergrößert sich, das haben verschiedene Versuche gezeigt, diese normierte Fläche.

Eine weitere Möglichkeit, die Wertepaarmenge im Hinblick auf den durch das Verhältnis von Schnittkraft zu Schnittnormalkraft bestimmten Verschleißkennwert auszuwerten besteht darin, in der wie vorstehend beschrieben bestimmten Wertepaarmenge solche Wertepaare zu bestimmen und einer charakteristischen Wertepaarmenge zuzuordnen, die in einem vorgegebenen Mindestabstand (oder weiter entfernt) zum Ursprung des Koordinatensystems liegen und die in einem Bereich mit gegenüber einer Umgebung signifikant erhöhter Wertepaardichte liegen. Theoretische Überlegungen haben nämlich ergeben und praktische Versuche haben dies bestätigt, dass eine solchermaßen bestimmte charakteristische Wertepaarmenge, die gleichermaßen in der Betrachtung in dem Koordinatensystem eine Wertepaaranhäufung mit verdichteter Anordnungsdichte der Wertepaare ergibt, mit ihren darin enthaltenen Wertepaaren Kraft- und/oder Biegemomentverhältnisse beschreibt, wie sie in den Momenten während des Schnittprozesses beim Angreifen der Schneide am Werkstück während des Abhebens eines Spans bestimmt sind, mithin denjenigen Momenten, in denen ein Verschleiß des Werkzeuges sich besonders deutlich äußert. Insoweit kann also aus den in der charakteristischen Wertepaarmenge liegenden Wertepaaren auf die Verhältnisse der während des eigentlichen Schnittes der Schneide beim Spanabheben anliegenden Biegemomente oder Kräfte geschlossen werden. Die Biegemomentkomponenten bzw. Kraftkomponenten, die erfindungsgemäß betrachtet werden, können dabei als die Spankräfte bzw. deren Komponenten Schnittkraft und Schnittnormalkraft repräsentierend aufgefasst werden. Es hat sich dabei weiter gezeigt, dass aus der Lage und/oder der Orientierung gerade auch der Wertepaare der charakteristischen Wertepaarmenge im Koordinatensystem Informationen über den Verschleißgrad des Werkzeuges erhalten werden können, also der einen Verschleißgrad des Werkzeugs repräsentierende Verschleißkennwert bestimmt werden kann.

Für die Bestimmung der charakteristischen Wertepaarmenge können ganz unterschiedliche Algorithmen und mathematische Vorgehensweisen verwendet werden. Hier können zum Beispiel Methoden der spektralen Analyse wie etwa die Fourier-Transformation Verwendung finden, wenn z.B. die Wertepaare nicht als Punkte, sondern mit einer gewissen radialen Ausdehnung in das Koordinatensystem eingetragen werden, das sich so ergebende Bild einer Fourier-Transformation unterzieht, dabei unterschiedliche Frequenzzuordnungen der "einzeln stehenden" Wertekreise und niedrigere Frequenzzuordnungen der sich überlappenden Wertekreise erhält, dann bei einer passenden Grenzfrequenz die höheren Frequenzen im Frequenzraum löscht (in der Praxis durch einen Tiefpassfilter) und dann die verbliebenen Werte wieder rücktransformiert in den Bildraum, der dann auf die charakteristische Wertepaarmenge reduziert ist. Es können auch andere Algorithmen verwendet werden, wie nachstehend noch näher beschrieben. Lässt sich ein Fachmann die vorgeschriebene Anordnung der Wertepaare in einem Koordinatensystem der vorstehend beschriebenen Art grafisch anzeigen, so ist der Bereich mit erhöhter Wertepaardichte, der abseits des Ursprungs liegt, deutlich auszumachen. Auch im Bereich des Ursprung selbst kann insbesondere bei einem Einschneidenwerkzeug eine erhöhte Wertepaardichte festzustellen sein, die daher rührt, dass das Werkzeug in Phasen, in denen kein Angriff einer Schneide am Werkstück erfolgt, ohne anliegende Schnittkräfte geführt ist, mithin keine oder nur sehr geringe Biegemomente und Kräfte erfährt.

Analysen und theoretische Überlegungen haben erbracht, dass eine Aussage über den Verschleiß einer Werkzeugschneide insbesondere immer dann gut abgeleitet werden kann, wenn das Werkzeug mit seiner Schneide am Werkstück dort in Eingriff steht, wo es den in seiner Spandicke variierenden Span mit minimaler Spandicke schneidet. Je nach Art des Schnittes kann dies, wenn das Werkzeug den Span mit ansteigender Spandicke schneidet am Anfang des Schnittangriffs (z.B. beim Gegenlauffräsen) geschehen, wenn das Werkzeug den Span mit abfallender Spandicke schneidet (z.B. beim Gleichlauffräsen), hingegen zum Ende des Schneidangriffes hin. Bei einem Werkzeug mit ideal scharfer Schneide ist insbesondere auch an diesem Punkt des Eingriffs eine grobe Proportionalität zwischen Schnittkraft und Schnittnormalkraft zu erwarten, was, wenn - wie für den vorliegenden Fall angenommen - die ermittelten Kraft- und/oder Biegemomentkomponenten als zu den genannten Schnittkraft und Schnittnormalkraft proportional angesetzt werden, zu einer im Wesentlichen einer den Ursprung des Koordinatensystems schneidenden Linie folgenden Anordnung der charakteristischen Wertepaare führt und zudem zu einem vergleichsweise dem Ursprung naheliegenden minimalen Wertepaar der charakteristischen Wertepaarmenge, wobei das minimale Wertepaar als ein solches definiert ist, das den geringsten Abstand zum Ursprung aufweist. Entsprechend können gemäß einer besonderen Weiterentwicklung des Verfahrens für die Bestimmung des Verschleißkennwertes die Lage und/oder Orientierung desjenigen Wertepaars oder derjenigen Wertepaare der charakteristischen Wertepaarmenge im Koordinatensystem gesondert berücksichtigt werden, das oder die einen Zustand des Bearbeitungsverfahrens beschreibt oder beschreiben, in dem die wenigstens eine Schneide einen Span in einem Spanabschnitt mit minimaler Spandicke abhebt.

Dies kann laut den vorstehenden Ausführungen insbesondere das vorstehend beschriebene minimale Wertepaar der charakteristischen Wertepaarmenge sein (vergleiche Anspruch 5). Es können hierbei aber auch mehrere Wertepaare betrachtet werden, die dann entsprechend nah zu dem Ursprung des Koordinatensystems orientiert sind. Diese können insbesondere als solche Wertepaare bestimmt werden, die in einem Abstand vom Ursprung gelegen sind, der durch einen Bruchteil des Abstandes des am weitesten vom Ursprung entfernt liegenden Wertepaars der charakteristischen Wertepaare bestimmt ist oder die einen solchen Abstand zum Ursprung noch unterschreiten. Der Bruchteil kann dabei insbesondere 10 %, vorzugsweise 5 % und besonders bevorzugt 2 % betragen.

Im Rahmen der Auswertung der Orientierung und Lage der charakteristischen Wertepaarmenge in dem Koordinatensystem kann insbesondere auch ein Abschnitt einer durch eine Funktion beschriebenen Kurve an die Wertepaare der charakteristischen Wertepaarmenge angepasst werden, wobei die Funktion basierend auf einer die Schnittkraftkomponenten zueinander in Relation setzenden Gleichung bestimmt ist. Diese Gleichung kann zum Beispiel anhand des von Kienzle entwickelten Zerspankraftmodells (s. O. Kienzle Bestimmung von Kräften an Werkzeugmaschinen in Werkstattechnik und Maschinenbau 47 (1957), S. 22-25 und O. Kienzle Bestimmung von Kräften an Werkzeugmaschinen in VDI-Z 94 (1952), S. 299-305) unter Berücksichtigung zusätzlicher den Verschleiß der Schneide repräsentierender Konstanten erstellt werden. Eine solche Gleichung kann, bezogen auf die Schnittkraft $F_c$ und die Schnittnormalkraft $F_{cn}$ zum Beispiel wie folgt lauten:

$$F_{cn} = F_c \frac{k_{cn1.1} h + C_{cn}}{k_{c1.1} h + C_c} \cdot h^{m_c - m_{cn}}$$

Wobei h für die Spandicke und b für die Spannbreite stehen und $k_{cn1.1}$, $k_{c1.1}$, $m_c$, $M_{cn}$, $C_{cn}$ sowie $C_c$ Konstanten sind und die beiden letztgenannten Konstanten den Verschleiß der Schneide auf der Spanfläche ($C_c$) bzw. auf der Freifläche ($C_{cn}$) wiedergeben (Diese Konstanten hätten also bei einer idealen, unverschlissenen Schneide jeweils den Wert null).

Bereits vorstehend wurde erwähnt, dass unterschiedliche Vorgehensweisen zur mathematischen bzw. durch einen Algorithmus vorgegebenen Bestimmung der charakteristischen Wertepaarmenge möglich sind. Eine mögliche Vorgehensweise kann dabei nach dem in Anspruch 9 bezeichneten Algorithmus erfolgen. Demnach werden nacheinander die folgenden Schritte durchgeführt

i. Aus der Wertepaarmenge wird ein maximales Wertepaar bestimmt, der im Vergleich zu den weiteren Wertepaaren der Wertepaarmenge einen maximalen Abstand zum Ursprung des Koordinatensystems aufweist. Hier wird mit anderen Worten dasjenige Wertepaar aus der Wertepaarmenge herausgesucht, der am weitesten vom Ursprung des Koordinatensystems entfernt liegt.

ii. Es wird ein Radiusmaß festgelegt, das durch einen vorgegebenen Bruchteil des Abstandes des maximalen Wertepaars zum Ursprung des Koordinatensystems bestimmt ist. Dieser Bruchteil kann zum Beispiel mindestens 1 %, insbesondere mindestens 2 %, besonders bevorzugt mindestens 5 %, dabei zugleich höchstens 20 %, insbesondere höchstens 10 %, bevorzugt höchstens 7 % betragen.

iii. Es werden diejenigen Wertepaare aus der Wertepaarmenge ausgesondert, die in einem das Radiusmaß oder weniger betragen Abstand zum Ursprung des Koordinatensystems liegen. Durch diese Maßnahme werden, insbesondere bei einem betrachteten Einschneidenwerkzeug, diejenigen Wertepaare ausgenommen, die für einen eingriffslosen Zustand der Schneide des Werkzeugs in Bezug auf das Werkstück stehen, aus denen also Aussagen bezüglich des Schneidenverschleißes nicht gezogen werden können.

iv. Es wird für jeden der nach Aussonderung der Wertepaare gemäß iii. verbleibenden Wertepaare der Wertepaarmenge die Nachbaranzahl von innerhalb eines Umkreises mit dem Radiusmaß liegenden weiteren der verbleibenden Wertepaare bestimmt. Diese Nachbaranzahl stellt ein Maß für die Dichte der Wertepaare dar, mit der diese in der Umgebung des jeweils betrachteten Wertepaars angeordnet sind.

v. Es wird eine Wertepaaranzahl als ein vorbestimmter Anteil der Anzahl der nach der Aussonderung nach Ziffer iii. verbleibenden Wertepaare ermittelt, und es werden diejenigen Wertepaare in der Wertepaaranzahl mit den höchsten in Schritt iv. ermittelten Nachbaranzahlen ausgewählt. Hier werden also mit anderen Worten die die höchsten Nachbaranzahlen aufweisenden Wertepaare in einer vorbestimmten Anzahl ermittelt, wobei diese vorbestimmte Anzahl durch den vorbestimmten Anteil vorgegeben ist. Der vorbestimmte Anteil kann insbesondere mindestens 0,1 %, insbesondere mindestens 0,5 %, besonders bevorzugt mindestens 1 %, und zugleich höchstens 20 %, insbesondere höchstens 10 %, besonders bevorzugt höchstens 2 % betragen. Grundsätzlich könnte hier auch allein dasjenige Wertepaar herausgesondert werden, der die höchste Nachbaranzahl aufweist. Um hier aber insbesondere durch Messrauschen oder dergleichen hervorgerufenen Störungen und Artefakten vorzubeugen, wird hier bevorzugt auf eine Gruppe von Messpunkten abgestellt.

vi. Es wird ein Mittelwert der Nachbaranzahlen der in Schritt v. ausgewählten Wertepaare ermittelt. Diese Mittelwertbildung dient ebenfalls einer Unterdrückung von durch Rauschen oder andere Artefakte in der Messsensorik oder in der sonstigen Datenverarbeitung hervorgerufenen Effekten. Sofern nur auf einen einzigen Messpunkt mit der höchsten Nachbaranzahl abgestellt wird, entfällt diese Mittelwertbildung selbstverständlich. Anstelle einer Mittelwertbildung kann hier auch eine andere, einen Schwerpunkt der Menge oder dergleichen angebender Wert aus der Statistik gewählt werden, z.B. der Median.

vii. Es werden diejenigen Wertepaare der nach der Aussonderung nach Ziffer iii. verbleibenden Wertepaare als charakteristische Wertepaare bestimmt und der charakteristischen Wertepaarmenge zugerechnet, die eine in Schritt iv. ermittelte Nachbaranzahl aufweisen, die einen Mindestanteil des in Schritt vi. ermittelten Mittelwertes aufweist und übersteigt (im Falle nur eines die höchste Nachbaranzahl aufweisenden, ausgewählten Wertepaars tritt dessen Nachbaranzahl an die Stelle des Mittelwertes). Der hier bezeichnete Mindestanteil kann dabei insbesondere mindestens 10 %, bevorzugt mindestens 20 %, besonders bevorzugt mindestens 30 %, zugleich aber auch höchstens 80 %, insbesondere höchstens 60 %, besonders bevorzugt höchstens 40 % betragen.

Wie bereits vorstehend erwähnt, ist der vorangehend beschriebene Algorithmus nicht die einzige Möglichkeit, die charakteristische Wertepaarmenge zu ermitteln. Insbesondere ist es für die Durchführung des erfindungsgemäßen Verfahrens auch nicht von essenzieller Wichtigkeit, die charakteristische Wertepaarmenge ganz exakt nach ihren im Hinblick auf die Lage des Abstandes zum Ursprung die charakteristische Wertepaarmenge begrenzenden Werten zu bestimmen. Auch wenn solche Randwerte und damit die charakteristische Wertepaarmenge etwas abweichend bestimmt werden bzw. wird, können in der hier näher offenbarten Weise immer noch Rückschlüsse auf den Verschleiß der Schneide getroffen und kann damit einer Verschleißkennzahl ermittelt werden.

Nach dem erfindungsgemäßen Verfahren kann der auf dem normierten Verhältnis von Schnittkraft zu Schnittnormalkraft fußende Verschleißkennwert in einer prozessparameterinvarianten Weise insbesondere unter Rückgriff auf eines oder mehrere der nachstehenden Kriterien (auch in Kombination) ermittelt werden:

a. den Abstand eines den geringsten Abstand zum Ursprung des Koordinatensystems aufweisenden Wertepaars aus der Menge der charakteristischen Wertepaare. Dabei kann dann insbesondere ein einen steigenden Verschleißgrad anzeigender Verschleißkennwert dann festgelegt werden, wenn der Abstand normiert auf eine Ausdehnung der Anordnung der charakteristischen Wertepaare in einer Längserstreckung ihrer Lage und Orientierung, wie sie zum Beispiel durch eine Länge eines Kurvenabschnittes einer an die Lage dieser Wertepaare angepassten Funktion in diesem Bereich bestimmt werden kann, zunimmt.

b. der Krümmungsrichtung einer nach den vorstehend näher bezeichneten Kriterien angepassten Kurve in dem bezeichneten Abschnitt. Dabei kann eine Krümmung im mathematisch negativen Sinn und kann weiterhin eine solche Krümmung mit abnehmendem Krümmungsradius als Maß für einen zunehmenden Verschleiß gewertet werden, sodass ein einen steigenden Verschleißgrad anzeigender Verschleißkennwert festgelegt wird.

c. einem Abstand eines den geringsten Abstand zum Ursprung des Koordinatensystems aufweisenden Wertepaars aus der Menge der charakteristischen Wertepaare zu einer den Ursprung des Koordinatensystems mit einem den größten Abstand zum Ursprung des Koordinatensystems aufweisenden Wertepaars aus der Menge der charakteristischen Wertepaare verbindenden Linie. Hier kann ein zunehmender Abstand, normiert auf eine Ausdehnung der Anordnung der charakteristischen Wertepaare in einer Längserstreckung ihrer Lage und Orientierung (also der Länge, wie sie oben bereits einmal unter a. bezeichnet worden ist) die Festlegung eines einen steigenden Verschleißgrad anzeigenden Verschleißkennwertes bedingen.

d. einem Winkelversatz zwischen einer den Ursprung des Koordinatensystems mit einem den größten Abstand zum Ursprung des Koordinatensystems aufweisenden Wertepaars aus der Menge der charakteristischen Wertepaare verbindenden Linie und einer den Ursprung des Koordinatensystem mit einem den geringsten Abstand zum Ursprung des Koordinatensystems aufweisenden Wertepaars aus der Menge der charakteristischen Wertepaare verbindenden Linie. Ein zunehmender Winkelversatz spricht für einen erhöhten Verschleiß.

e. der Größe einer zwischen den vorstehend in Ziffer d. bezeichneten Linien und der nach Anspruch 8 angepassten Kurve in dem in Anspruch 8 bezeichneten Abschnitt bezogen auf den Abstand des den größten Abstand zum Ursprung des Koordinatensystems aufweisenden Wertepaars aus der Menge der charakteristischen Wertepaare zum Ursprung des Koordinatensystems. Eine zunehmende normierte Fläche spricht für einen erhöhten Verschleiß.

Eine weitere Möglichkeit, die Verschleißkennzahl zu ermitteln, kann darin bestehen, dass in der vorstehend bereits näher beschriebenen Funktion, die für die Anpassung an die Lage der Wertepaare der charakteristischen Wertepaarmenge verwendet wird, einen Verschleiß repräsentierende Parameter enthalten sind, die für ein Anpassen an die Lage der charakteristischen Wertepaarmenge variiert und festgelegt werden, wobei der Verschleißkennwert anhand der bei der Anpassung festgelegten, den Verschleiß repräsentierende Parameter bestimmt wird.

Es sind auch noch weitere Auswertungen der sich aufgrund einer Veränderung des Verhältnisses von Schnittkraft zu Schnittnormalkraft ergebenden typischen Formänderungen der Lage der charakteristischen Wertepunktmenge möglich.

Das erfindungsgemäße Verfahren kann insbesondere bei Fräsbearbeitungen zum Einsatz kommen, bei denen das Werkzeug also ein Fräswerkzeug ist. Insbesondere kann es dann angewendet werden, wenn bei der Fräsbearbeitung Momente betrachtet werden (können), bei denen eine einzelne Schneide in Eingriff mit dem Werkstück steht. Eine Anwendung dieses Verfahrens ist aber ebenso gut bei anderen spanenden Bearbeitungsverfahren möglich, wie z.B. Drehen oder Bohren, wenn bei diesen Verfahren der Werkzeugeingriff jedenfalls für die Datenaufnahme so gestaltet wird, dass ein Span mit entlang des Spans variierender Spanungsdicke erzeugt wird.

Wie bereits erläutert, ist das Verfahren besonders einfach und leicht zu erzielender Aussagekraft umzusetzen, wenn es sich bei dem betrachteten Werkzeug um ein Einschneidenwerkzeug handelt. Es kann aber auch mit Mehrschneidenwerkzeugen durchgeführt werden, wobei aussagekräftige Ergebnisse immer dann erhalten werden, wenn in dem Bearbeitungsablauf solche Situationen betrachtet werden, in denen lediglich eine Schneide des Mehrschneidenwerkzeugs mit dem Werkstück zum spanenden Bearbeiten in Eingriff steht oder bei einem Eingriff mehrerer Schneiden die auf eine der Schneiden bezogenen Daten rechnerisch ermittelt werden können, z.B. durch winkelabhängige, scheidenorientierte Differenzbildung.

Weitere Vorteile und Merkmale der Erfindung ergeben sich aus der nachstehenden Beschreibung eines Ausführungsbeispiels anhand der beigefügten Figuren. Dabei zeigen:

Fig. 1 schematisch die Vorgänge bei einem Werkzeugeingriff beim Fräsen in einem Stirn-Umfangs-Planfräs-Prozess im Gleichlauf am Beispiel eines Vierschneidenwerkzeuges;

Fig. 2 in einer vergrößerten Ausschnittsdarstellung der Figur 1 zusätzlich noch die Aufteilung der an der Werkzeugschneide anliegenden Spankräfte nach Schnittkraft und Schnittnormalkraft;

Fig. 3 ein Beispiel für die Darstellung von für ein Einschneidenwerkzeug während des Bearbeitungsvorganges aufgenommenen Wertepaaren in einer Koordinatendarstellung nach Biegemomentkomponenten in einer x- und einer y-Richtung bei unverschlissener Schneide;

Fig. 4 eine der Figur 3 vergleichbare Darstellung für während des Bearbeitungsvorganges mit einem Einschneidenwerkzeug aufgenommene Wertepaare bei fortgeschrittenem Verschleiß der Schneide;

Fig. 5 die Darstellung der Wertepaare gemäß Figur 3 mit an einen Bereich gehäufter Punktedichte angepasster Deskriptorlinie;

Fig. 6 die Darstellung der Wertepaare gemäß Figur 4 mit an einen Bereich gehäufter Punktedichte angepasster Deskriptorlinie; und

Fig. 7 eine den Figuren 3 bis 6 vergleichbare Wertepaardarstellung im Koordinatensystem der Biegemomentkomponenten für ein Vierschneidenwerkzeug mit einer überlagerten Darstellung einer durch eine Simulation erhaltenen Linie.

Anhand der nachfolgenden Beschreibung und unter Bezugnahme auf die beigefügten Figuren soll nun das Prinzip und sollen die wesentlichen Merkmale der Erfindung noch einmal erläutert werden.

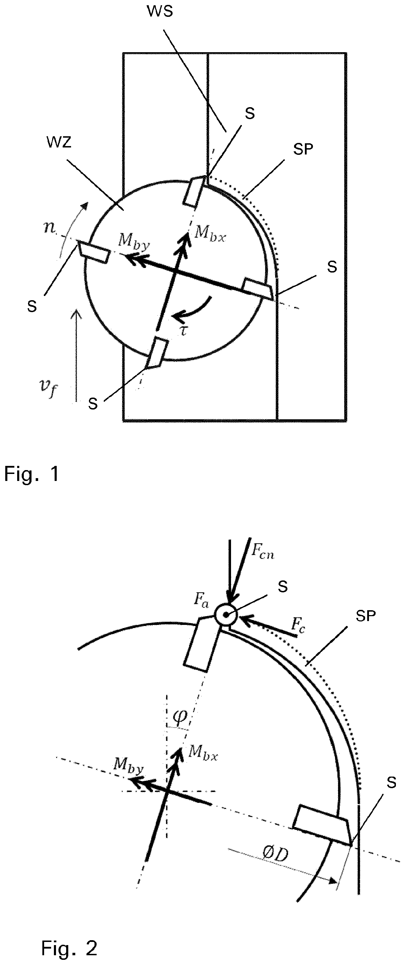

In Figur 1 ist zunächst eine schematische Darstellung für den Schneidprozess bei einem Stirn-Umfangs-Planfräsen im Gleichlauf gezeigt. In dieser Figur ist ein Werkzeug WZ mit insgesamt vier Schneiden S gezeigt, welches mit einer Drehzahl n in Richtung des mit diesem Buchstaben bezeichneten Pfeils rotiert. Gleichzeitig wird das Werkzeug WZ mit einer Vorschubgeschwindigkeit $V_f$ in Richtung des mit dieser Buchstabenkombination bezeichneten Pfeiles voran bewegt. In der in Figur 1 dargestellten Position des Werkzeugs WZ greift die in der Figur zuoberst dargestellte Schneide S gerade am Material eines Werkstücks WS an und wird im weiteren Zuge der Rotation einen durch die gepunktete Linie veranschaulichten Span SP aus dem Werkstück WS herausschneiden, wobei dieser Span SP mit abnehmender Spandicke geschnitten wird. Bei diesem Prozess erfährt das Werkzeug WZ eine Torsionsmoment $\tau$ und ein Biegemoment, dass sich in ortsfest zu dem Werkzeug WZ liegende und senkrecht zu der Rotationsachse sowie senkrecht aufeinander stehende Komponenten $M_{bx}$ und $M_{by}$ zerlegen lässt.

In der Figur 2 ist noch einmal vergrößert der Ausschnitt dargestellt, in dem das Werkzeug WZ mit der in dieser Figur oben dargestellten Schneide S an dem Werkstück WS angreift, um den Span SP zu schneiden. Hier sind die an der Schneide anliegenden Kräfte Schnittkraft $F_c$ und Schnittnormalkraft $F_{cn}$ zusätzlich eingetragen, die, wie hier zu erkennen ist, zu den zueinander senkrechten und senkrecht auf der Rotationsachse stehenden, zum rotierenden Werkzeug ortsfesten Biegemomentkomponenten $M_{bx}$ und $M_{by}$ korrelieren. Diese Korrelation ist dabei in sehr guter Näherung eine proportionale.

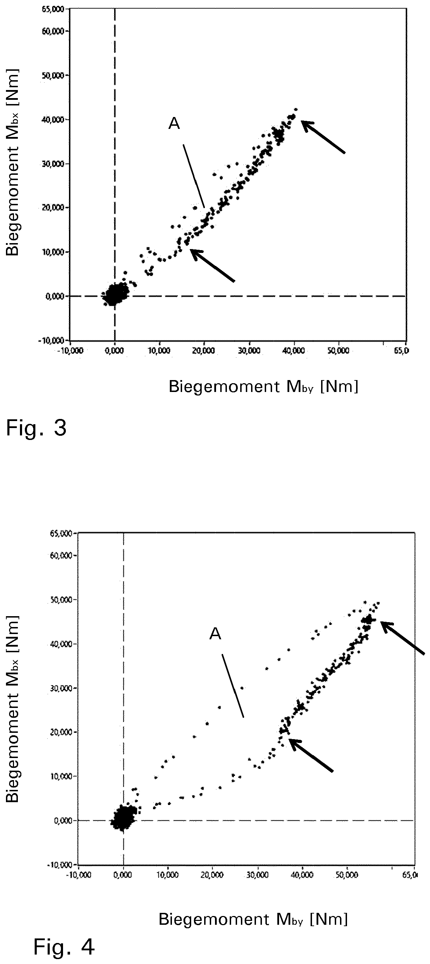

Mit einer entsprechenden Messsensorik, zum Beispiel dem bereits vorstehend erwähnten SPIKE® der hiesigen Mitanmelderin pro-micron GmbH, können nun entsprechende Biegemomentkomponenten zeitlich aufgelöst und mit zeitgleicher Messung der beiden Komponenten aufgenommen und erfasst und in einer entsprechend nachgeschalteten Datenverarbeitung miteinander zu Wertepaaren korreliert werden. Diese werden nun, was ein erfindungswesentliches Merkmal des hier beschriebenen Verfahrens ist, in einer Darstellung, wie sie den Figuren 3 bis 7 jeweils gezeigt ist, aufgetragen. Aufgetragen werden hier also an den jeweils aufeinander senkrecht stehenden Achsen eines Koordinatensystems die Werte des Betrages für die Biegemomentkomponenten entlang der entsprechenden Richtungen. Hier ist für die Darstellung ein Auftrag in einem kartesischen Koordinatensystem gewählt. Dies ist allerdings nicht zwingend erforderlich. Es wäre auch möglich, z.B. die erhaltenen Wertepaare in Koordinaten einer anderen Auftragung umzurechnen, z.B. in Polarkoordinaten, und dann in einem entsprechenden Koordinatensystem aufzutragen. Dies würde ein gleiches Ergebnis ergeben.

In wie in den Figuren 3 bis 7 gezeigten Darstellungen ergeben sich dann für die unterschiedlichen Werkzeuge mit unterschiedlichem Verschleiß Bilddarstellungen, wie sie den genannten Figuren abgebildet sind. Aus diesen Bilddarstellungen, so die Erkenntnis der Erfindung, kann nun auf ein Verhältnis zwischen Schnittkraft zu Schnittnormalkraft geschlossen werden und damit auch prozessparameterinvariant auf einen Verschleißzustand des Werkzeugs bzw. bei einem mehrschneidigen Werkzeug sogar der einzelnen Schneiden.

Erläutert wird dies zunächst einmal anhand der Figuren 3 und 4. In Figur 3 ist die Darstellung von wie vorstehend beschrieben aufgenommenen Wertepaaren gezeigt, wie sie sich für ein Einschneidenwerkzeug mit einer unverschlissenen Schneide zeigt. Erkennbar ist, dass die Wertepaare sich entlang einer Linie erstrecken, die hier, da die Werkzeugschneide entsprechend den Messrichtungen der Biegemomentkomponenten in dem mit der Messsensorik ausgestatteten Werkzeughalter eingebaut worden ist, in den ersten Quadranten des Koordinatensystems hinein und dabei in guter Näherung entlang der Winkelhalbierenden verläuft. Dieser den Vorgang einer Spanbildung abbildende Verlauf steht dafür, dass hier Schnittkraft und Schnittnormalkraft zueinander grob proportional sind. Dabei ist es aber nicht erfindungswesentlich, dass das Werkzeug exakt zu den Messrichtungen der Messsensorik des Werkzeughalters ausgerichtet ist. Ein Versatz führt letztlich nur zu einer Rotation der Wertepaare um den Ursprung des Koordinatensystems. Die Auswertung kann aber in gleicher Weise und wie nachstehend noch näher beschrieben erfolgen.

Zu erkennen ist in den Figuren 3 und auch 4 zunächst einmal eine starke Häufung von Wertepaaren im Bereich des Ursprungs des Koordinatensystems. Dort sind diejenigen Wertepaare für Biegemomentmessungen zu Zeiten eingezeichnet, zu denen die Schneide des Werkzeugs keinen Eingriff mit dem Werkstück hatte, sodass also keine (oder keine wesentlichen) Biegemomentkomponenten gemessen wurden. Die Wertepaare, die von null verschiedene Biegemomente bzw. Biegemomentkomponenten aufzeigen, sind solche, bei denen das Werkzeug mit seiner Schneide am Werkstück angreift. In Figur 3 sind bereits zwei besondere Eigenschaften zu erkennen, die die entsprechende Darstellung ausmachen.

Zum einen ist ein Abschnitt zu erkennen, in dem die in dem Koordinatensystem eingetragenen Wertepaare in einer deutlich gegenüber dem Rest erhöhten Punktdichte liegen. Dieser Abschnitt ist durch zwei diesen begrenzende Pfeile in der Figur 3 gekennzeichnet. In diesem Abschnitt liegen die aus der insgesamt eingezeichneten Wertepaarmenge als charakteristische Wertepaare bzw. als charakteristische Wertepaarmenge bezeichneten Wertepaare.

Theoretische Überlegungen ergeben dabei, dass dieser Abschnitt zeitlich gesehen denjenigen Bearbeitungszustand beschreibt, in dem das Werkzeug mit seiner Schneide am Werkstück angreift und aktiv den Span schneidet, also den Schnittprozess betreibt. Bei dem am weitesten vom Ursprung des Koordinatensystems gelegenen Ende des Abschnitts mit der erhöhten Punktdichte schneidet das Werkzeug den Span mit großer Spandicke (hier sind hohe Schnittkräfte und mithin große zu diesen korrelierende Biegemomentkomponenten zu verzeichnen), an dem nahe dem Koordinatenursprung gelegenen Ende dieses Bereiches geht der Schnitt in den Bereich mit gegen null gehender Spandicke (hier sind die Schnittkräfte und mithin die korrelierenden Biegemomentkomponenten geringer). Eine weitere augenscheinliche Besonderheit und ein Merkmal dieser Darstellung ist eine Fläche A, die zwischen einem Ast der von den Wertepunkten aufgespannten Figur, in dem der Bereich mit den charakteristischen Wertepaaren liegt, und einem gleichermaßen auf der Rückseite, in der Figur links oberhalb, liegenden Abschnitt mit sehr wenig und in geringer Punktdichte eingezeichneten Wertepaaren liegt. Diese Fläche A ist in dem in Figur 3 gezeigten Fall einer ideal scharfen und unverschlissenen Schneide vergleichsweise klein.

Im Vergleich dazu zeigt Figur 4 ein vergleichbares Einschneidenwerkzeug in einem vergleichbaren Fräsvorgang, welches Werkzeug deutliche Verschleißerscheinungen aufweist. Auch hier erstrecken sich die Wertepaare entlang einer vom Ursprung ausgehenden in den ersten Quadranten des Koordinatensystems hinein reichenden Linie, wobei sich eine deutliche Ausweitung des Bereichs rechts und links dieser Linie zeigt. Diese Aufweitung bedingt eine Vergrößerung der Fläche A zwischen den wie vorstehend beschriebenen Ästen der durch die Wertepaare beschriebenen Figur. Auch in der Figur 4 ist besonders gut der Bereich mit einer erhöhten Dichte an Wertepaaren zu erkennen, der wiederum durch zwei Pfeile mit seinem Anfang und Ende beschrieben ist. Auch hier stellt dieser Abschnitt wiederum die charakteristische Wertepaarmenge mit den charakteristischen Wertepaaren dar, die den eigentlichen Schnittprozess des Werkzeugs beim Schneiden des Spans bzw. die dabei gewonnenen Messwerte darstellen.

Der Verschleiß des Werkzeugs und seiner Schneide äußert sich bei dem Abbild in Figur 4 in einer Verschiebung des Verhältnisses von Schnittkraft zu Schnittnormalkraft weg von einem ungefähren Verhältnis von 1:1 zu einem deutlich zugunsten der Schnittkraft liegenden Verhältnis. Damit einher geht eine Vergrößerung der Fläche A, sodass diese Fläche A, für eine bessere Unabhängigkeit von den Prozessparameter noch einmal normiert auf einen Abstandswert in dem Diagramm, zum Beispiel die Länge einer gedachten Linie vom Ursprung bis zu einem am weitesten von diesem entfernt liegenden Wertepaar im Bereich des rechts oben gelegenen Pfeils in der Figur, als ein Kennwert für einen Verschleiß verwendet werden kann. Weiterhin ersichtlich ist hier, dass der Abstand der charakteristischen Wertepaare vom Ursprung, insbesondere der Abstand eines ursprungsnächsten charakteristischen Wertepaars vom Ursprung des Koordinatensystems gegenüber dem unverschlissenen Fall deutlich vergrößert ist. Auch dieser Abstand kann, gegebenenfalls normiert auf ein Längenmaß, zum Beispiel die Länge der Erstreckung der charakteristischen Wertepaare entlang einer an dieser angepassten Linie, als eine Kenngröße für den Verschleiß gewählt werden. Auch diese Charakteristika in der Darstellung sind ein Abbild für das verschobene Verhältnis von Schnittkraft zu Schnittnormalkraft aufgrund des eingetretenen Verschleißes des Werkzeugs.

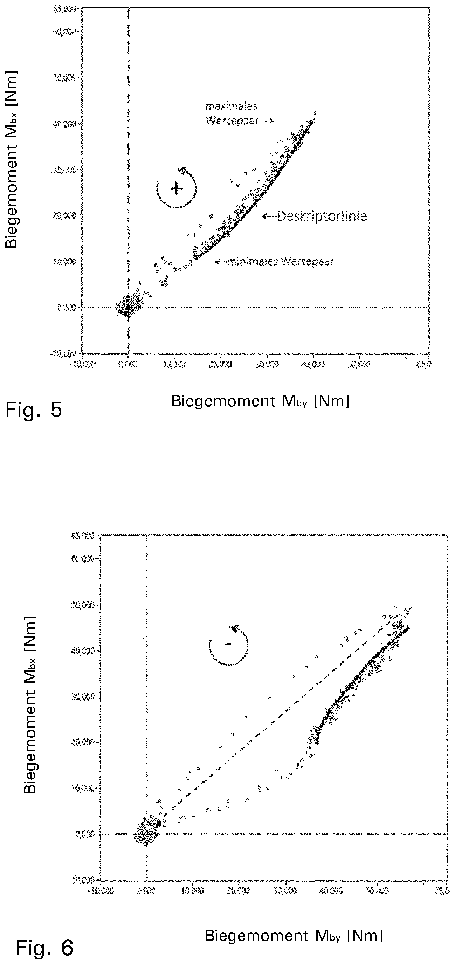

Eine weitere Möglichkeit der Auswertung ergibt sich, wenn, wie in den Figuren 5 und 6 dargestellt, eine hier als Deskriptorlinie bezeichnete Linie eines den Bereich der charakteristischen Wertepaare abdeckenden Abschnitts einer Kurve an die Lage der charakteristischen Wertepaare angepasst wird, wobei diese Anpassung nach einer wie vorstehend in der allgemeinen Beschreibung beschriebenen Funktion und Abhängigkeit der Schnittnormalkraft von der Schnittkraft bzw. einer entsprechend proportional gestalteten Abhängigkeit der zugeordnete Biegemomentkomponenten erfolgt. Ein Vergleich der Figuren 5 und 6 lässt erkennen, dass für das unverschlissene Werkzeug die Deskriptorlinie eine Krümmung im mathematisch positiven Sinne aufzeigt, während für das verschlissene Werkzeug hier eine mathematisch negative Krümmung erkennbar ist. Auch diese Krümmung ist damit ein Indikator und letztlich ein Maß für das aufgrund des Verschleißes des Werkzeugs veränderte Verhältnis von Schnittkraft zu Schnittnormalkraft. Es lassen sich weitere mögliche Auswertungen finden, zum Beispiel kann, wie Figur 6 erkennen lässt, eine Verbindungslinie zwischen einem maximalen Wertepaar der charakteristischen Wertepaare und dem Ursprung des Koordinatensystems gezogen werden, kann eine weitere Linie zwischen dem Ursprung des Koordinatensystems und einem minimalen Wertepaare der charakteristischen Wertepaare gezogen werden und eine Fläche, die aufgespannt ist zwischen den vorstehend bezeichneten Verbindungslinien und der Deskriptorlinie ermittelt werden, kann diese Fläche erneut auf ein Längenmaß normiert werden und bildet diese Fläche ebenfalls einen Kennwert für den Verschleiß, der insbesondere prozessparameterunabhängig den Verschleißzustand beschreibt.

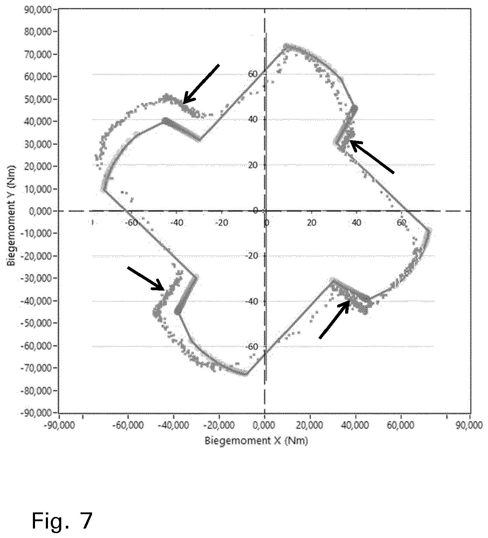

In Figur 7 ist nun ein Auftrag der Wertepaare in einer wie vorstehend bereits beschriebenen Darstellung gezeigt, wie sie sich für ein Vierschneidenwerkzeug ergibt (eingetragene Messpunkte) und ist dieser Auftrag von einem Simulationsergebnis überlagert (durchgezogene Linie). Auch in dieser Darstellung lässt sich jeweils ein Abschnitt mit erhöhter Punktdichte der Wertepaare erkennen, der jeweils für das Schnittverhalten der einzelnen Schneiden steht und in dem wie vorstehend bereits beschrieben die charakteristischen Wertepaare ermittelt werden können. Diese Bereiche sind in der Figur 7 jeweils mit einem Pfeil aufgezeigt. Diese charakteristischen Wertepaare und deren Lage und Verlauf (Orientierung) können nun - für jede der Schneiden - nach den vorstehend anhand eines Einschneidenwerkzeugs erläuterten Kriterien beurteilt und für die Bestimmung eines Verschleißkennwertes ausgewertet werden.

Die Ermittlung der charakteristischen Wertepaare kann ganz allgemein in einer Auswertung grafisch erfolgen anhand einer angezeigten Grafik. Für die Ermittlung der Wertepaare können aber auch Algorithmen herangezogen werden, wie sie vorstehend in der allgemeinen Beschreibung beschrieben worden sind. Vergleichbares gilt für die Bestimmung weiterer Größen aus den Darstellungen nach den bestimmten Koordinaten. Insbesondere ist eine Anzeige der Diagramme dabei nicht zwingend erforderlich. Es kann eine Auswertung auch unmittelbar anhand der Wertepaare in einem Rechnersystem erfolgen, ohne eine grafische Anzeige.

**Bezugszeichenliste**

| | |
|---|---|
| A | Fläche |
| $F_c$ | Schnittkraft |
| $F_{cn}$ | Schnittnormalkraft |
| n | Drehzahl |
| $M_{bx}$ | Biegemomentkomponente |
| $M_{by}$ | Biegemomentkomponente |
| S | Schneide |
| SP | Span |
| $V_f$ | Vorschubgeschwindigkeit |
| WS | Werkstück |
| WZ | Werkzeug |
| $\tau$ | Torsionsmoment |

**Patentansprüche**

1. Verfahren zur prozessparameterinvarianten Bestimmung eines Verschleißkennwertes für den Verschleiß eines um eine Rotationsachse drehend angetriebenen, wenigstens eine Schneide aufweisenden Werkzeugs zum spanenden Bearbeiten eines Werkstücks mit nicht konstanter Spandicke entlang eines von dem Werkstück abgehobenen Spans, wobei das Verfahren während eines Bearbeitungsvorganges durchgeführt wird, wobei in wiederholten ersten Messungen jeweils eine auf dem Werkzeug in einer senkrecht zu der Rotationsachse und relativ zu dem rotierenden Werkzeug ortsfest liegenden ersten Richtung wirkende erste Kraft- und/oder Biegemomentkomponente erfasst wird, wobei in zeitgleich zu den ersten Messungen durchgeführten, wiederholten zweiten Messungen jeweils eine auf dem Werkzeug in einer senkrecht zu der Rotationsachse und senkrecht zu der ersten Richtung liegenden, relativ zu dem rotierenden Werkzeug ortsfesten zweiten Richtung wirkende zweite Kraft- und/oder Biegemomentkomponente erfasst wird und wobei Wertepaare aus zeitgleich erfassten ersten und zweiten Kraft-und/oder Biegemomentkomponenten in einem zweidimensionalen Koordinatensystem als Wertepaare einer Relation der zweiten Kraft- und/oder Biegemomentkomponente in Abhängigkeit von der ersten Kraft- und/oder Biegekomponente abgebildet werden und wobei die Verteilung der Wertepaare in dem Koordinatensystem ausgewertet wird, **dadurch gekennzeichnet, dass**

    a. in der Verteilung solche Wertepaare als zu der wenigstens einen Schneide gehörig ermittelt und einer Wertepaarmenge zugerechnet werden, die entlang einer sich kontinuierlich vom Ursprung des Koordinatensystems weg erstreckenden Linie liegen,
    b. für die Wertepaare der Wertepaarmenge anhand der Lage und/oder Orientierung der Wertepaare in dem Koordinatensystem auf ein Verhältnis einer bei einem Schnittvorgang auf dem Werkzeug lastenden Schnittkraft zu einer bei dem Schnittvorgang auf dem Werkzeug lastenden Schnittnormalkraft geschlossen und daraus ein den Verschleißgrad des Werkzeuges repräsentierender Verschleißkennwert abgeleitet wird.

2. Verfahren nach Anspruch 1, **dadurch gekennzeichnet, dass** für den Rückschluss auf das Verhältnis der bei dem Schnittvorgang auf dem Werkzeug lastenden Schnittkraft zu der bei dem Schnittvorgang auf dem Werkzeug lastenden Schnittnormalkraft eine Fläche in dem Koordinatensystem betrachtet wird, die von an die Lage der Wertepaare angepassten Linien umschlossen ist.

3. Verfahren nach Anspruch 1, **dadurch gekennzeichnet, dass** aus der in Schritt a. bestimmten Wertepaarmenge solche in einem vorgegebenen Abstand zum Ursprung des Koordinatensystems liegenden Wertepaare bestimmt und einer charakteristischen Wertepaarmenge zugeordnet werden, die in einem Bereich mit gegenüber einer Umgebung signifikant erhöhter Wertepaardichte liegen, und dass aus der Lage und/oder Orientierung der Wertepaare der charakteristischen Wertepaarmenge im Koordinatensystem auf das Verhältnis der bei dem Schnittvorgang auf dem Werkzeug lastenden Schnittkraft zu der bei dem Schnittvorgang auf dem Werkzeug lastenden Schnittnormalkraft geschlossen und daraus der den Verschleißgrad des Werkzeuges repräsentierende Verschleißkennwert bestimmt wird.

4. Verfahren nach Anspruch 3, **dadurch gekennzeichnet, dass** für die Bestimmung des Verschleißkennwertes die Lage und/oder Orientierung desjenigen Wertepaars oder derjenigen Wertepaare der charakteristischen Wertepaarmenge im Koordinatensystem gesondert berücksichtigt wird oder werden, der oder die einen Zustand des Bearbeitungsverfahrens beschreibt oder beschreiben, in dem die wenigstens eine Schneide einen Span in einem Spanabschnitt mit minimaler Spandicke abhebt.

5. Verfahren nach Anspruch 4, **dadurch gekennzeichnet, dass** als dasjenige Wertepaar, das einen Zustand des Bearbeitungsverfahrens beschreibt, in dem die wenigstens eine Schneide einen Span in einem Spanabschnitt mit minimaler Spandicke abhebt, das Wertepaar aus der Menge der charakteristischen Wertepaare bestimmt wird, der den kürzesten Abstand zum Ursprung des Koordinatensystems aufweist.

6. Verfahren nach Anspruch 4, **dadurch gekennzeichnet, dass** als diejenigen Wertepaare, die einen Zustand des Bearbeitungsverfahrens beschreiben, in dem die wenigstens eine Schneide einen Span in einem Spanabschnitt mit minimaler Spandicke abhebt, die Wertepaare aus der Menge der charakteristischen Wertepaare bestimmt werden, die nah zu dem Ursprung des Koordinatensystems orientiert sind.

7. Verfahren nach Anspruch 6, **dadurch gekennzeichnet, dass** als diejenigen Wertepaare, die einen Zustand des Bearbeitungsverfahrens beschreiben, in dem die wenigstens eine Schneide einen Span in einem Spanabschnitt mit minimaler Spandicke abhebt, die Wertepaare aus der Menge der charakteristischen Wertepaare bestimmt werden, die einen durch einen Bruchteil des Abstandes des am weitesten vom Ursprung entfernt liegenden Wertepaars der charakteristischen Wertepaare bestimmten oder einen geringeren Abstand vom Ursprung aufweisen, wobei der Bruchteil insbesondere 10%, vorzugsweise 5%, besonders bevorzugt 2% beträgt.

8. Verfahren nach einem der Ansprüche 3 bis 7, **dadurch gekennzeichnet, dass** an die Wertepaare der charakteristische Wertepaarmenge ein Abschnitt einer durch eine Funktion beschriebenen Kurve angepasst wird, wobei die Funktion basierend auf einer die Zerspankraftkomponenten zueinander in Relation setzenden Gleichung bestimmt ist.

9. Verfahren nach einem der Ansprüche 3 bis 8, **dadurch gekennzeichnet, dass** für die Bestimmung der charakteristischen Wertepaare folgendes Vorgehen erfolgt:

i. aus der Wertepaarmenge wird ein maximaler Wertepaar bestimmt, der im Verhältnis zu den weiteren Wertepaaren der Wertepaarmenge einen maximalen Abstand zum Ursprung des Koordinatensystems aufweist;

ii. ein Radiusmaß wird als ein vorgegebener Bruchteil des Abstandes des maximalen Wertepaars zum Ursprung des Koordinatensystems bestimmt,

iii. es werden diejenigen Wertepaare aus der Wertepaarmenge ausgesondert, die in einem das Radiusmaß oder weniger betragenden Abstand zu dem Ursprung des Koordinatensystems liegen,

iv. es wird für jeden der nach Aussonderung der Wertepaare gemäß iii. verbleibenden Wertepaare der Wertepaarmenge die Nachbaranzahl von innerhalb eines Umkreises mit dem Radiusmaß liegenden weiteren der verbleibenden Wertepaare bestimmt,

v. es wird eine Wertepaaranzahl als ein vorbestimmter Anteil der Anzahl der nach der Aussonderung nach Ziffer iii. verbleibenden Wertepaare ermittelt, und es werden diejenigen Wertepaare in der Wertepaaranzahl mit den höchsten in Schritt iv. ermittelten Nachbaranzahlen ausgewählt,

vi. es wird ein Mittelwerte der Nachbaranzahlen der in Schritt v. ausgewählten Wertepaare ermittelt,

vii. es werden diejenigen Wertepaare der nach der Aussonderung nach Ziffer iii. verbleibenden Wertepaare als charakteristische Wertepaare bestimmt, die eine in Schritt iv. ermittelte Nachbaranzahl aufweisen, die einen Mindestanteil des in Schritt vi. ermittelten Mittelwertes aufweist oder übersteigt.

10. Verfahren nach Anspruch 9, **dadurch gekennzeichnet, dass** der in Ziffer ii. bezeichnete Bruchteil mindestens 1 %, insbesondere mindestens 2%, besonders bevorzugt mindestens 5%, und höchstens 20%, insbesondere höchstens 10%, besonders bevorzugt höchstens 7% beträgt.

11. Verfahren nach einem der Ansprüche 9 oder 10, **dadurch gekennzeichnet, dass** der in Ziffer v. bezeichnete Anteil mindestens 0,1 %, insbesondere mindestens 0,5 %, besonders bevorzugt mindestens 1 %, und höchstens 20%, insbesondere höchstens 10%, besonders bevorzugt höchstens 2% beträgt.

12. Verfahren nach einem der Ansprüche 9 bis 11, **dadurch gekennzeichnet, dass** der in Ziffer vii. bezeichnete Mindestanteil mindestens 10%, insbesondere mindestens 20%, besonders bevorzugt mindestens 30%, und höchstens 80%, insbesondere höchstens 60%, besonders bevorzugt höchstens 40% beträgt.

13. Verfahren nach einem der Ansprüche 3 bis 12, **dadurch gekennzeichnet, dass** der Verschleißkennwert entsprechend einem oder einer Kombination aus mehreren der nachstehenden Kriterien ermittelt wird:

a. dem Abstand eines den geringsten Abstand zum Ursprung des Koordinatensystems aufweisenden Wertepaars aus der Menge der charakteristischen Wertepaare,

b. der Krümmungsrichtung einer nach Anspruch 8 angepassten Kurve in dem in Anspruch 8 bezeichneten Abschnitt,

c. einem Abstand eines den geringsten Abstand zum Ursprung des Koordinatensystems aufweisenden Wertepaars aus der Menge der charakteristischen Wertepaare zu einer den Ursprung des Koordinatensystems mit einem den größten Abstand zum Ursprung des Koordinatensystems aufweisenden Wertepaars aus der Menge der charakteristischen Wertepaare verbindenden Linie,

d. einem Winkelversatz zwischen einer den Ursprung des Koordinatensystems mit einem den größten Abstand zum Ursprung des Koordinatensystems aufweisenden Wertepaars aus der Menge der charakteristischen Wertepaare verbindenden Linie und einer den Ursprung des Koordinatensystem mit einem den geringsten Abstand zum Ursprung des Koordinatensystems aufweisenden Wertepaars aus der Menge der charakteristischen Wertepaare verbindenden Linie;

e. der Größe einer zwischen den vorstehend in Ziffer d. bezeichneten Linien und der nach Anspruch 8 angepassten Kurve in dem in Anspruch 8 bezeichneten Abschnitt bezogen auf den Abstand des den größten Abstand zum Ursprung des Koordinatensystems aufweisenden Wertepaars aus der Menge der charakteristischen Wertepaare zum Ursprung des Koordinatensystems.

14. Verfahren nach Anspruch 13, **dadurch gekennzeichnet, dass** für die in Anspruch 13 genannten Kriterien folgende Bedingungen einen steigenden Verschleißgrad anzeigenden Verschleißkennwert bedingen:

- für das in Anspruch 13 unter Ziffer a. genannte Kriterium: in zunehmender Abstand, normiert auf eine Ausdehnung der Anordnung der charakteristischen Wertepaare in einer Längserstreckung ihrer Lage und Orientierung,

- für das in Anspruch 13 unter Ziffer b. genannten Kriterium: eine Krümmung im mathematische negativen Sinn mit abnehmenden Krümmungsradius,

- für das in Anspruch 13 unter Ziffer c. genannte Kriterium: ein Zunehmender Abstand, normiert auf eine Ausdehnung der Anordnung der charakteristischen Wertepaare in einer Längserstreckung ihrer Lage und Orientierung,

- für das in Anspruch 13 unter Ziffer d. genannte Kriterium: ein Zunehmen des Winkelversatzes,

- für das in Anspruch 13 unter Ziffer e. genannte Kriterium: eine Zunahme der Größe der Fläche bezogen auf den Abstand des den größten Abstand zum Ursprung des Koordinatensystems aufweisenden Wertepaars aus der Menge der charakteristischen Wertepaare zum Ursprung des Koordinatensystems.

15. Verfahren nach Anspruch 8 oder nach einem der Ansprüche 9 bis 12, soweit diese mittelbar oder unmittelbar auf Anspruch 8 rückbezogen sind, **dadurch gekennzeichnet, dass** in der Funktion einen Verschleiß repräsentierenden Parameter enthalten sind, die für ein Anpassen an die Kurve variiert und festgelegt werden, wobei der Verschleißkennwerte anhand der bei der Anpassung festgelegten den Verschleiß repräsentierenden Parameter bestimmt wird.

16. Verfahren nach einem der vorhergehenden Ansprüche, **dadurch gekennzeichnet, dass** das Werkzeug ein Fräswerkzeug und der Bearbeitungsprozess ein Fräsprozess ist.

Fig. 1

Fig. 2

Fig. 3

Fig. 4

Fig. 5

Fig. 6

Fig. 7

Europäisches Patentamt

European Patent Office

Office européen des brevets

# EUROPÄISCHER RECHERCHENBERICHT

Nummer der Anmeldung

EP 17 20 2822

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Pro-micron GmbH & Co. KG: "Sensorischer Werkzeughalter spike : Funktionsweise", You Tube, 20. September 2016 (2016-09-20), Seite 1, XP054978348, Gefunden im Internet: URL:https://www.youtube.com/watch?v=YhweIl ObC5M&list=PLMP17yFtGBTmd36f_yqi-C0m7xh3lt lPn [gefunden am 2018-05-15] | 1-3,8, 15,16 | INV. G05B19/4065 B23Q17/09 |
| Y | * Zusammenfassung * * 2' 50" - 3' 08" * ----- | 4-7,13, 14 | |
| X | FR 3 034 693 A1 (CENTRE TECHNIQUE DES IND MEC ET DU DECOLLETAGE [FR]) 14. Oktober 2016 (2016-10-14) | 1-8, 13-16 | |
| Y | * Zusammenfassung * * Seiten 1-4 * * Seiten 8-15 * * Abbildungen 1,3-5,7-9 * ----- | 4-7,13, 14 | |
| A | Kistler Gruppe: "Betriebsanleitung DynoWare Typ 2825A...", Internet, 1. Juli 2017 (2017-07-01), XP055474636, Gefunden im Internet: URL:https://www.kistler.com/?type=669&fid= 74515&model=document [gefunden am 2018-05-14] * Seiten 71-75 * ----- | 1-16 | **RECHERCHIERTE SACHGEBIETE (IPC)** G05B B23Q |

Der vorliegende Recherchenbericht wurde für alle Patentansprüche erstellt

| Recherchenort | Abschlußdatum der Recherche | Prüfer |
|---|---|---|
| Den Haag | 17. Mai 2018 | Dörre, Thorsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 2822

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-05-2018

| Im Recherchenbericht angeführtes Patentdokument | Datum der Veröffentlichung | Mitglied(er) der Patentfamilie | Datum der Veröffentlichung |
|---|---|---|---|
| FR 3034693 A1 | 14-10-2016 | CA 2982496 A1<br>EP 3283929 A1<br>FR 3034693 A1<br>US 2018117725 A1<br>WO 2016166173 A1 | 20-10-2016<br>21-02-2018<br>14-10-2016<br>03-05-2018<br>20-10-2016 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 2924526 A1

**In der Beschreibung aufgeführte Nicht-Patentliteratur**

• **O. KIENZLE.** Bestimmung von Kräften an Werkzeugmaschinen. *Werkstattechnik und Maschinenbau,* 1957, vol. 47, 22-25

• **O. KIENZLE.** Bestimmung von Kräften an Werkzeugmaschinen. *VDI-Z,* 1952, vol. 94, 299-305